## Europäisches Patentamt

## European Patent Office

## Office européen des brevets

(19)

(11) Veröffentlichungsnummer: **0 208 121**
**B1**

(12)

# EUROPÄISCHE PATENTSCHRIFT

(45) Veröffentlichungstag der Patentschrift:
06.12.89

(51) Int. Cl.⁴: **H 04 N 5/91**

(21) Anmeldenummer: **86107321.1**

(22) Anmeldetag: **30.05.86**

(54) Schaltung zur Verbesserung der Wiedergabe-Bildschärfe in einem Videorecorder.

(30) Priorität: **20.06.85 DE 3521991**

(43) Veröffentlichungstag der Anmeldung:
**14.01.87 Patentblatt 87/3**

(45) Bekanntmachung des Hinweises auf die Patenterteilung:
**06.12.89 Patentblatt 89/49**

(84) Benannte Vertragsstaaten:
**AT BE CH DE FR GB IT LI LU NL SE**

(56) Entgegenhaltungen:
**EP-A-0 015 499**
**DE-B-1 230 467**
**US-A-3 333 055**
**US-A-3 715 477**
**US-A-3 980 813**
**US-A-4 015 076**
**US-A-4 386 434**
**US-A-4 520 396**

(73) Patentinhaber: **Deutsche Thomson- Brandt GmbH, Hermann- Schwer- Strasse 3 Postfach 1307, D-7730 Villingen- Schwenningen (DE)**

(72) Erfinder: **Kluth, Hans- Jürgen, Weichselstrasse 11, D-7730 Villingen- Schwenningen (DE)**

**Beschreibung**

Die Erfindung geht aus von einer Schaltung gemäß dem Oberbegriff des Anspruchs 1. Diese durch die US-A-4 015 076 bekannte Schaltung dient in einem Videorekorder dazu, in dem Videosignal Impulsspitzen, sogenannte Überschwinger, zu Beginn der Zeilenaustastzeit zu beseitigen, die bei der Bildwiedergabe die Zeilensynchronisierung stören können.

Bei Videorekordern nach den Systemen VHS, Betamax oder Video 2000 wird bekanntlich das Leuchtdichtesignal durch Frequenzmodulation eines Bildträgers aufgezeichnet, während der Farbträger mit einer heruntergesetzten Frequenz von etwa 600 kHz bis 1,2 MHz unterhalb des Frequenzspektrums des modulierten Bildträgers aufgezeichnet wird. Bei derartigen Geräten beträgt die Bandbreite des aufgezeichneten und für die Bildwiedergabe verfügbaren Leuchtdichtesignals nur etwa 2,5 - 3,5 MHz, also beträchtlich weniger als die Videobandbreite von 5 MHz eines genormten Fernsehsignals. Diese Verringerung der Bandbreite bewirkt zwangsläufig eine Verringerung der Bildschärfe bei der Wiedergabe, da die hohen Frequenzanteile des Leuchtdichtesignals im Bereich von 2 - 5 MHz fehlen.

Es ist bekannt, in derartigen Fällen mit sogenannten Crispening-Schaltungen die Bildschärfe zu erhöhen. Bei derartigen Schaltungen wird im allgemeinen dem Leuchtdichtesignal ein durch zweifache Differentiation gewonnenes und gegebenenfalls in der Amplitude begrenztes Korrektursignal hinzugefügt. Derartige Schaltungen erzeugen eine Versteilerung des Videosignals bei Signalkanten, bewirken jedoch keine echte Erhöhung des Videofrequenzbereiches über etwa 2,5 - 3 MHz hinaus. Die mit derartigen Schaltungen wiedergegebenen Bilder können daher plastisch und natürlich wirken.

Der Erfindung liegt die Aufgabe zugrunde, die eingangs beschriebene bekannte Schaltung so weiterzubilden, daß damit eine Erhöhung der Bildschärfe bei der Wiedergabe des vom Band entnommenen Videosignals erreicht wird.

Diese Aufgabe wird durch die im Anspruch 1 beschriebene Erfindung gelöst. Vorteilhafte Weiterbildungen der Erfindung sind in den abhängigen Ansprüchen beschrieben.

Bei der erfindungsgemäßen Schaltung wird also nicht wie bei den üblichen Differenzierentzerrern der zeitliche Verlauf des Videosignals im Sinne einer Erhöhung der Steilheit von Kanten beeinflußt. Vielmehr wird unmittelbar die Amplitude von Signalanteilen in dem Teilbereich der Videobandbreite erhöht, in dem an sich die Amplitude der Signalanteile praktisch auf null abfällt. Durch die Erfindung kann mit einfachen Mitteln eine deutlich bessere Bildwiedergabe erreicht werden, ohne daß die eigentliche Bandbreite des vom Band abgetasteten Leuchtdichtesignals erhöht wird.

Die Erfindung wird in folgenden anhand der Zeichnung erläutert. Darin zeigen

Fig. 1   ein Blockschaltbild der erfindungsgemäßen Schaltung und

Fig. 2   Diagramme der in Fig. 1 auftretenden Signale.

In der Zeichnung bedeuten:

$Y^o$ = demoduliertes Leuchtdichtesignal hinter dem Tiefpaß des Demodulators für den frequenzmodulierten Bildträger hinter der sogenannten Deemphasis

$Y$ = bisheriges, nicht korrigiertes schmalbandiges Leuchtdichtesignal

$Y'$ = das Leuchtdichtesignal des Teilbereiches der Videobreite, also etwa von 2 - 3,5 MHz

$Y''$ = Korrektursignal nach der Rauschbefreiung und der Amplitudenbegrenzung

$Y'''$ = korrigiertes, breitbandiges Leuchtdichtesignal.

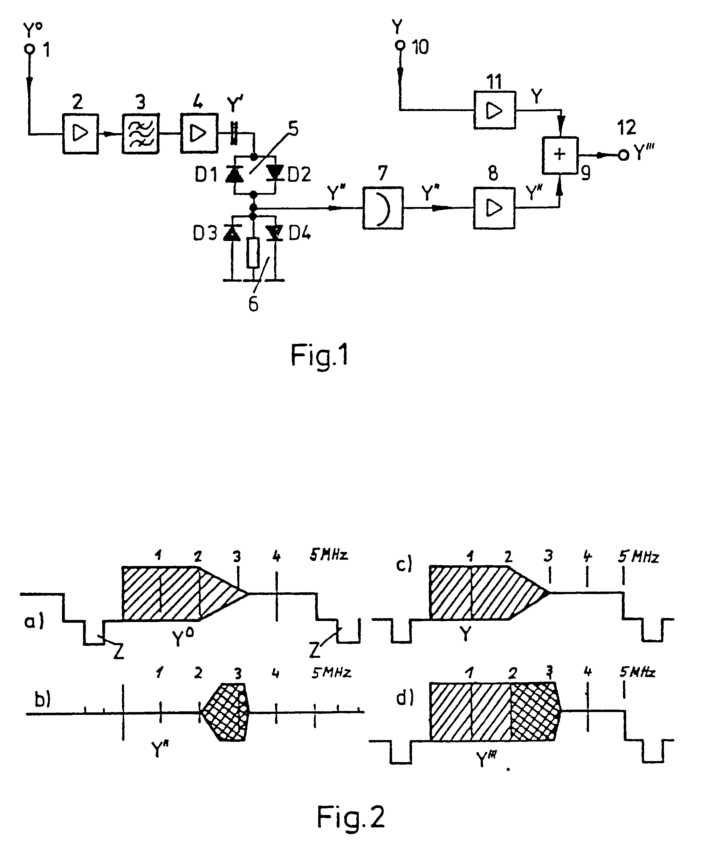

In Fig. 1 steht an der Klemme 1 das Leuchtdichtesignal $Y^o$, das in Fig. 2a für eine Zeilendauer dargestellt ist. Das Leuchtdichtesignal zwischen zwei Zeilensynchronimpulsen Z besteht aus einem sogenannten Multiburst-Signal, also einer Sinusschwingung, deren Frequenz während der Zeilenhinlaufzeit von etwa 100 kHz bis 5 MHz ansteigt. Bei der Aufzeichnung eines derartigen Signales mit einem Videorecorder entsteht gemäß Fig. 2a ein starker Amplitudenabfall etwa im Bereich von 2 - 3,5 MHz, wobei das Signal zwischen 3,5 MHz und 5 MHz praktisch die Amplitude null hat. Das Signal $Y^o$ wird über den Verstärker 2 dem Bandpaß 3 zugeführt, der einen Durchlaßbereich von etwa 2 - 3,5 MHz hat. Dadurch wird das Leuchtdichtesignal $Y'$ gewonnen, das somit nur den Frequenzanteil des Leuchtdichtesignals $Y^o$ zwischen 2 und 3,5 MHz darstellt. Die Verstärker 2,4 bewirken eine Verstärkung von etwa 10 - 30 dB. Durch diese Verstärkung wird auch der Rauschanteil verstärkt. Daher gelangt das Signal $Y'$ über einen Koppelkondensator auf die AmplitudenSchwellwertschaltung 5 mit den beiden antiparallel geschalteten Dioden D1 und D2, die nur das Signal oberhalb eines bestimmten positiven und negativen Pegels durchläßt. Dadurch werden Rauschanteile herausgeschnitten. Die Verstärkung ist so eingestellt, daß das verstärkte Rauschen die Schwelle der Dioden D1 und D2, also etwa +0,7 V und -0,7 V, nicht überschreitet und somit unterdrückt wird. Da die Hochfrequenzanteile des Leuchtdichtesignals starke Amplitudenschwankungen aufweisen, ist der Amplitudenbegrenzer 6 mit den Dioden D3 und D4 vorgesehen, der die Amplitude des gewonnenen Korrektursignals $Y''$ begrenzt. Der Amplitudenbegrenzer 6 liefert somit das Korrektursignal $Y''$ gemäß Fig. 2b im Bereich von 2 - 3,5 MHz. Dieses Korrektursignal gelangt über die zum Laufzeitausgleich dienende Stufe 7 und den Verstärker 8 auf die Addierstufe 9. Das ursprüngliche, nicht frequenzmäßig korrigierte, aber möglicherweise in einer Noisecancelschaltung behandelte Leuchtdichtesignal Y (daher

# EP 0 208 121 B1

nicht = $Y^o$) wird von der Klemme 10 über den Verstärker 11 ebenfalls der Addierstufe 9 zugeführt. In der Addierstufe 9 wird das Leuchtdichtesignal Y gemäß Fig. 2c, dessen Amplitude bei 3 MHz bereits auf null abgefallen ist, mit dem Korrektursignal Y" vom Verstärker 8 addiert. Dadurch entsteht an der Klemme 12 das korrigierte Leuchtdichtesignal Y"' gemäß Fig. 2d. Es ist ersichtlich, daß dieses Signal auch im Bereich von 2 - 3,5 MHz eine weitestgehend konstante Amplitude hat verglichen mit der Amplitude im Bereich von 0 - 2 MHz. Der starke Amplitudenabfall des Signals $Y^o$ bzw. auch Y von 2 - 3,5 MHz, der die Bildschärfe bei der Wiedergabe beeinträchtigt, ist also beseitigt. Das korrigierte Signal Y"' gemäß Fig. 2d ist also ein vollwertiges Leuchtdichtesignal mit einer Bandbreite von etwa 2,5 MHz ohne nennenswerten Amplitudenabfall zu hohen Videofrequenzen hin.

Die Schaltung gemäß Fig. 1 liegt also in einem Videorecorder im Wiedergabeweg des Leuchtdichtesignals Y. Das korrigierte Leuchtdichtesignal Y"' wird dann später mit dem von Band abgetasteten, in der Frequenz wieder auf die ursprüngliche Frequenzlage von 4,43 MHz heraufgesetzten Farbträger addiert.

Die beiden in Fig. 1 mit $Y^o$ und mit Y bezeichneten Signale sind im wesentlichen gleich. Y ist das Leuchtdichtesignal direkt hinter dem Demodulator-Tiefpaß. Darauf folgt im allgemeinen ein Deemphasenglied und eine Noisecancelschaltung, die den Störabstand im Leuchtdichtesignal verringern. Das dadurch gewonnene Leuchtdichtesignal ist in Fig. 1 mit $Y^o$ bezeichnet.

Der Kondensator in Fig. 1 zwischen den Stufen 4,5 dient als Koppelkondensator und verhindert, daß die Dioden D1, D2 eine Vorspannung erhalten. Der schräge Anstieg des Signales Y" gemäß Fig. 2b ist bedingt durch den Übergangsbereich des Bandpasses 3.

**Patentansprüche**

1. Schaltung zur Herstellung eines korrigierten Leuchtdichtesignals (Y"') in einem Videorecorder, bei der das ursprüngliche, in einer Deemphasis korrigierte Leuchtdichtesignal ($Y^o$) über ein Frequenzfilter (3), einen Verstärker (4) und einen Amplitudenbegrenzer (6) an eine Addierstufe (9) angelegt ist, *dadurch gekennzeichnet*, daß das Frequenzfilter als Bandpaß (3) mit einem Durchlaßbereich von 2 - 3,5 MHz ausgebildet ist, der dem Frequenzteilbereich entspricht, in dem die Amplitude des Leuchtdichtesignals ($Y^o$) auf null abfällt, und daß der Addierstufe (9) außerdem das nicht korrigierte Leuchtdichtesignal (Y) zugeführt ist.

2. Schaltung nach Anspruch 1, *dadurch gekennzeichnet*, daß vor dem Amplitudenbegrenzer (6) eine Amplituden-Schwellwertschaltung (5) liegt, die das Signal nur oberhalb eines bestimmten positiven und negativen Spannungspegels durchläßt.

3. Schaltung nach Anspruch 2, *dadurch gekennzeichnet*, daß die Schwellwertschaltung (5) zwei im Signalweg liegende, antiparallel geschaltete Dioden (D1, D2) oder als Dioden geschaltete Transistoren enthält.

4. Schaltung nach Anspruch 1, *dadurch gekennzeichnet*, daß die Verstärkung des Verstärkers (4) 10 - 30 dB beträgt.

**Claims**

1. A circuit for producing a corrected luminance signal (Y"') in a video recorder, in which the original luminance signal ($Y^o$), corrected in a de-emphasis means is applied via a frequency filter (3), an amplifier (4) and an amplitude limiter (6) to an adding stage (9), characterised in that the frequency filter is formed as a band pass filter (3) having a pass band of 2 - 3.5 MHz, which corresponds to the part of the frequency range in which the amplitude of the luminance signal ($Y^o$) falls to zero and that the uncorrected luminance signal (Y) is supplied moreover to the adding stage (9).

2. A circuit according to claim 1, characterised in that an amplitude threshold value circuit (5) is located in front of the amplitude limiter (6), said circuit (5) only allowing through the signal above a certain positive and negative voltage level.

3. A circuit according to claim 2, characterised in that the threshold value circuit (5) includes two diodes (D1, D2), or transistors connected as diodes, which lie in the signal path and are connected in antiparallel.

4. A circuit according to claim 1, characterised in that the amplification of the amplifier (4) is 10 - 30 dB.

**Revendications**

1. Circuit pour produire un signal de luminance corrigé (Y"') dans un enregistreur vidéo, dans lequel le signal de luminance initial ($Y^o$), corrigé par désaccentuation, est appliqué, par l'intermédiaire d'un filtre de fréquence (3), d'un amplificateur (4) et d'un limiteur d'amplitude (6) à un étage additionneur (9), caractérisé en ce que le filtre de fréquence est réalisé sous la forme d'un filtre passe-bande (3) possédant une bande passante égale à 2 - 3,5 MHz, qui correspond à la plage partielle des fréquences, dans laquelle l'amplitude du signal de luminance ($Y^o$) s'annule, et que le signal de luminance (Y) non corrigé est en outre envoyé à l'étage additionneur (9).

2. Circuit selon la revendication 1, caractérisé en ce qu'en amont du limiteur d'amplitude (6) se trouve disposé un circuit à valeur de seuil d'amplitude (5), qui laisse passer le signal uniquement au-dessus de niveaux de tension déterminés, positif et négatif.

3. Circuit selon la revendication 2, caractérisé en ce que le circuit à valeur de seuil (5) contient deux diodes (D1, D2), situées dans la voie de transmission des signaux et branchées selon un montage antiparallèle, ou des transistors branchés en diode.

4. Circuit selon la revendication 1, caractérisé en ce que l'amplification de l'amplificateur (4) est égale à 10 - 30 dB.

Fig.1

Fig.2